# EUROPEAN PATENT APPLICATION

(11) **EP 1 763 209 A2**
(43) Date of publication of application: **14.03.2007**
(21) Application number: 06120581.1
(22) Date of filing: 13.09.2006
(51) Int. Cl.: H04M 1/57, H04M 1/725

(54) **Method for image communication in mobile equipment and corresponding apparatus**

(30) Priority: 13.09.2005 KR 20050085317
(71) Applicant: Samsung Electronics Co., Ltd., Suwon-si, Gyeonggi-Do (KR)
(72) Inventor: Kim, Choon-Seop, Samsung Electronics Co., Ltd., Gyeonggi-do (KR)
(74) Representative: Grünecker, Kinkeldey, Stockmair & Schwanhäusser Anwaltssozietät

(57) **Abstract**

Disclosed is a method for image communication. The method including when an image communication call is received in a mobile equipment from an originator (i.e., a calling party), a control unit detects the phone number of the originator, if the phone number of the originator corresponds with a phone number registered in a phonebook, the control unit checks a transmission image corresponding to the phone number of the originator and then transmits the transmission image in the form of a basic substitute image, an alternative substitute image or a real photograph image, if the phone number of the originator does not correspond to the phone number registered in the phonebook, the control unit checks whether the substitute image transmission mode has been established in the mobile equipment, if the substitute image transmission mode has been established in the mobile equipment, the basic substitute image is transmitted to the originator. Accordingly, the user is able to select images that are to be automatically transmitted to the originator for image communication and it is possible to prevent the image from being transmitted to the originator depending on situation of the user.

## Description

The present invention relates to image communication in a mobile equipment, and more particularly relates to a method for transmitting a substitute image during image communication.

With the development of mobile communication technologies, such as a wideband code division multiple access (WCDMA) technology, mobile communication systems can provide an image communication service in addition to a voice communication service. As the image communication service has become commercially available, users can transmit a dynamic image photographed by a camera installed in a mobile equipment together with voice in real time during image communication. Since the image of the user or the scenery around the user can be simultaneously transmitted to other users during communication, the communication is enhanced.

However, depending upon location and/or the called or calling parties the user may not want to transmit the image of the user or the scenery around the use. In addition, when a call is received with an unknown phone number in an image communication mode, since the user does not know the calling party, the user may be reluctant to send the image to the calling party. Also, the user may not want to transmit the image of the user or the scenery around the user when the user is placed in a private space or a secure area.

Thus, it is necessary to provide an image communication scheme having a function of preventing an image from being transmitted when a user does not want to transmit the image. In addition, it is also necessary to provide an image communication scheme capable of selectively transmitting an image of a user or a scenery around the user by checking a phone number of an originator when an image communication call is received from the originator.

A wideband code division multiple access (WDCMA) terminal, which is one type of mobile equipment that supports image communication, includes a subscriber identity module (SIM) card. The SIM card is a smart card used for storing user authentication information, communication coding information and user information, such as a phonebook. In general, a mobile equipment having the SIM card serves as a mobile station. The mobile equipment can communicate by accessing the mobile communication network using authentication information and coding information stored in the SIM card. In addition, the mobile equipment can inquire and use user information, such as the phonebook or a short message, stored the SIM card.

Since the SIM card can perform authentication and communication coding functions as well as a user information storing function, such as a phonebook, one SIM card can be flexibly used for mobile equipment of various types or a plurality of SIM cards can be used for mobile equipment of a single type.

Accordingly, it is desirable to provide an image communication scheme which can prevent an image from being transmitted by using information stored in an SIM card when a user does not want to transmit the image.

Accordingly, the present invention has been made to solve the above-mentioned problems occurring in the prior art.

It is the object of the present invention to provide a mobile communication apparatus and a method for image communication in a mobile equipment capable of selectively transmitting an image according to selection of a user.

This object is solved by the subject matter of the independent claims.

Preferred embodiments are defined by the subject matter of the dependent claims.

An aspect of the present invention is to provide a method for image communication capable of transmitting a substitute image in addition to an image photographed by a camera during image communication.

In order to accomplish the above, the present invention provides a method for image communication in a mobile equipment, the method including detecting a phone number of an originator when an image communication call is received; checking whether the phone number of the originator corresponds to phone numbers registered in a phonebook; and selecting a transmission image from between a real photograph image and a substitute image, which have been previously established corresponding to the phone numbers registered in the phonebook, and then transmitting a selected transmission image to the originator during image communication when the phone number of the originator corresponds to the phone numbers registered in the phonebook.

Further, the present invention provides a mobile communication apparatus that is adapted to perform accordingly to the above methods.

The present invention will be more apparent from the following detailed description taken in conjunction with the accompanying drawings, in which:
FIG. 1 is a block diagram illustrating the structure of a mobile equipment used for the present invention;
FIG. 2 is a block diagram illustrating the operational procedure of a mobile equipment when a substitute image is established according to the present invention;
FIG. 3 is a flowchart illustrating the operational procedure of a mobile equipment when a substitute image is established according to the present invention; and
FIG. 4 is a flowchart illustrating the operational procedure of a mobile equipment when a substitute image is transmitted according to the present invention.

Hereinafter, preferred embodiments of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear.

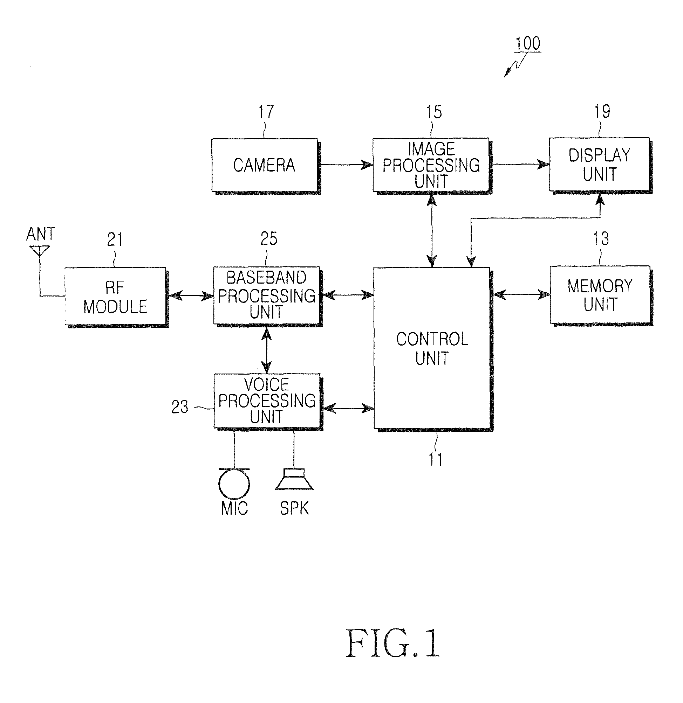

First, the structure of a mobile equipment used for the present invention will be described with reference to FIG. 1.

FIG. 1 is a block diagram illustrating the structure of the mobile equipment used for the present invention.

As shown in FIG. 1, the mobile equipment 100 includes a control unit 11, a memory unit 13, an image processing unit 15, a camera 17, a display unit 19, a baseband processing unit 25, a radio frequency (RF) module 21, and a voice processing unit 23.

The control unit 11 controls an operation of the mobile equipment 100.

The RF module 21 transmits/receives wireless signals to/from a base station through an antenna (ANT). That is, the RF module 21 modulates a signal input thereto from the control unit 11 through the baseband processing unit 25 and then transmits an RF signal through the antenna. In addition, the RF module 21 demodulates the RF signal input thereto through the antenna and then transmits the RF signal to the control unit 11 through the baseband processing unit 25. The baseband processing unit 25 processes baseband signals transmitted between the RF module 21 and the control unit 11.

The voice processing unit 23 connected to the control unit 11 and a microphone (MIC) and a speaker (SPK) connected to the voice processing unit 23 are used for phone communication and voice recoding. The voice processing unit can include a coder/decoder (CODEC).

The display unit 19 displays various image information and an image, which is transmitted from the base station or stored in the memory unit 13, on a screen under the control of the control unit 11. The display unit can include a liquid crystal display (LCD), a touch screen, or other display device.

The camera 17 outputs an image frame, which is obtained by means of an image sensor, to the image processing unit 15. Upon receiving the image frame from the camera 17, the image processing unit 15 converts the image frame into image data suitable for the display unit 15 under the control of the control unit 11 in such a manner that the image can be displayed on the display unit 19. The image can include still images as well as motion pictures.

The memory unit 13 stores programs required for processing and control operations of the control unit 11, reference data, various storage data which can be updated, and phonebook data. The memory unit 13 serves as a working memory of the control unit 11. In addition, the memory unit 13 stores program data related to a substitute image transmission mode and a transmission image setting mode according to the present invention. Also, the memory unit 13 stores a plurality of substitute images serving as a basic substitute image or an alternative substitute image.

In the substitute image transmission mode, a predetermined substitute image, rather than a normal image photographed by a camera, is transmitted to a calling partner. When an image communication call is received with an unknown phone number or a phone number, which is not registered in the phonebook, a basic substitute image is transmitted to the calling partner during image communication.

In the transmission image setting mode, an image to be transmitted during image communication is set corresponding to phone numbers registered in the phonebook. That is, one of a basic substitute image, an alternative substitute image, and a real photograph image is set during the transmission image setting mode according to the user's selection. The basic substitute image is preset by the user. The alternative substitute image is selected by the user from among a plurality of substitute images, which have been previously stored in the memory unit. The substitute image may be a still picture, a moving picture or an animation. In addition, the user can prepare a plurality of substitute images in order to set the alternative substitute image. For instance, the user can store the substitute images in the memory unit by photographing the user or the scenery in the form of a still picture or a moving picture. The real photograph image refers to an image photographed in real time during image communication.

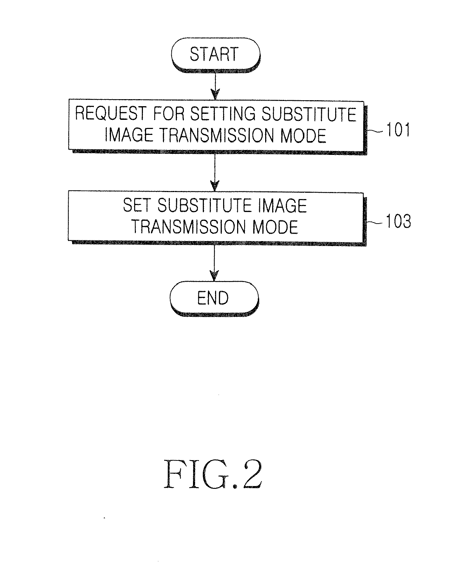

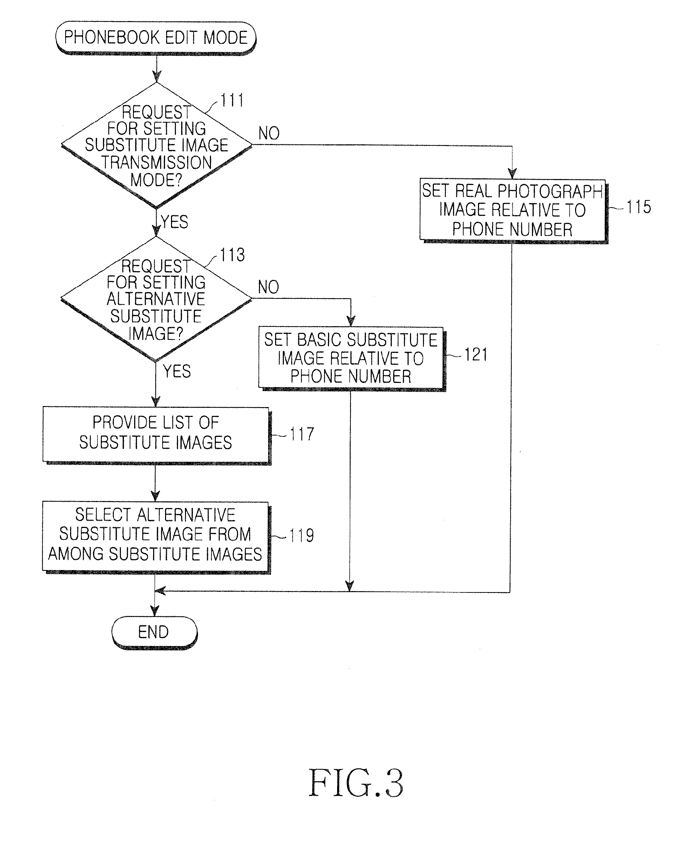

The operational procedures of the control unit 11 of the mobile equipment 100 in the substitute image transmission mode and the transmission image setting mode are shown in FIGS. 2 and 3, respectively. FIG. 2 is a block diagram illustrating the operational procedure of the mobile equipment 100 in the substitute image setting mode according to one embodiment of the present invention, and FIG. 3 is a flowchart illustrating the operational procedure of the mobile equipment 100 in the substitute image setting mode according to another embodiment of the present invention.

As shown in FIG. 2, when the user requests the substitute image transmission mode in step 101, the control unit 11 of the mobile equipment 100 sets the mobile equipment 100 as the substitute image transmission mode in step 103.

In addition, as shown in FIG. 3, in order to set the transmission image corresponding to the phone number registered in the phonebook, the control unit 11 of the mobile equipment 100 determines in step 111 whether there is a request for setting a substitute image corresponding to a predetermined phone number registered in the phonebook in a phonebook edit mode. If it is determined in step 111 that there is a request for setting a substitute image corresponding to a predetermined phone number, step 113 is performed. However, if it is determined in step 111 that there is no request for setting a substitute image corresponding to a predetermined phone number, step 115 is performed. When there is no request for setting a substitute image corresponding to a predetermined phone number registered by the user, the control unit 11 transmits the real photograph image as the image communication call is received in the mobile equipment from the calling partner having the predetermined phone number.

Meanwhile, in step 113, the control unit 111 checks whether there is a request for setting an alternative substitute image. If it is determined in step 113 that there is a request for setting an alternative substitute image for a predetermined phone number, step 117 is performed. However, if it is determined in step 113 that there is no request for setting an alternative substitute image for a predetermined phone number, step 121 is performed. When there is no request for setting an alternative substitute image, the control unit sets a basic substitute image for the predetermined phone number in step 121. In addition, when there is a request for setting the alternative substitute image from the user in step 113, the control unit 11 provides a list for substitute images stored in the memory unit in step 117. In step 119, the control unit 11 sets the substitute image selected by the user as the alternative substitute image for the corresponding phone number.

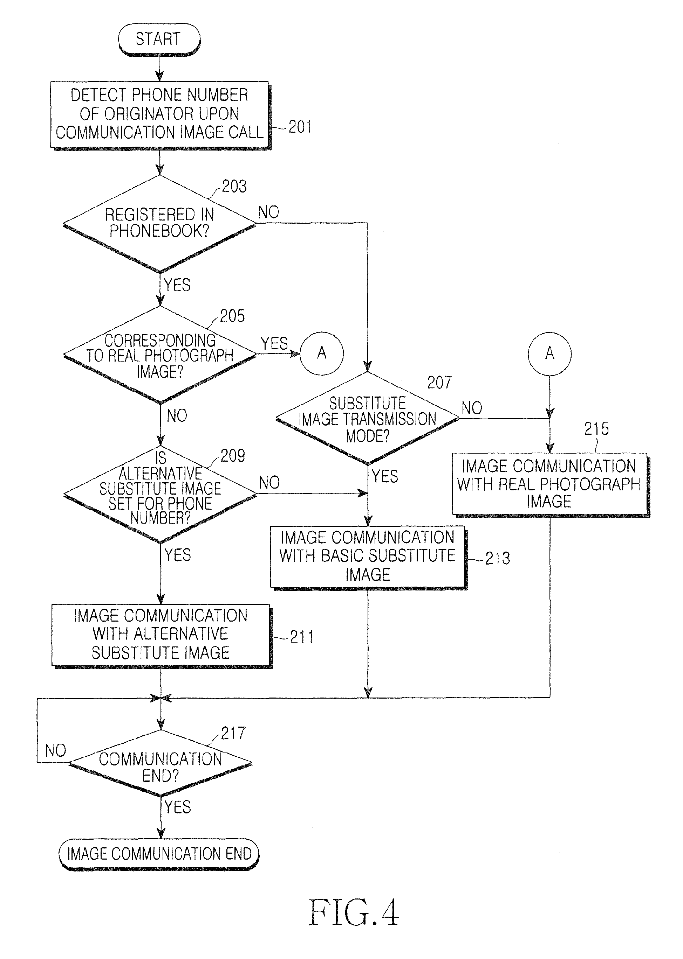

If the image communication call is received in the mobile equipment after the substitute image transmission mode or the transmission image for image communication has been set, the control unit 11 detects a phone number of an originator (calling partner). If the phone number of the originator corresponds to a phone number registered in the phonebook, the control unit 11 selects a transmission image corresponding to the phone number of the originator and then transmits the transmission image in the form of a basic substitute image, an alternative substitute image or a real photograph image. However, if the phone number of the originator does not correspond to the phone number registered in the phonebook, the control unit 11 checks whether the substitute image transmission mode has been established. If the substitute image transmission mode has been established, the control unit 11 sends the basic substitute image to the originator. Such an operational procedure of the mobile equipment 100 is shown in FIG. 4, which is a flowchart illustrating the operational procedure of the mobile equipment 100 when the substitute image is transmitted during image communication according to the present invention.

Referring to FIG. 4, the control unit 11 detects the image communication call and the phone number of the originator (i.e., calling party) step 201. Then, the control unit 11 checks whether the phone number of the originator corresponds to a phone number registered in the phonebook in step 203. If it is determined in step 203 that the phone number of the originator corresponds to the phone number registered in the phonebook, step 205 is performed. However, if it is determined in step 203 that the phone number of the originator does not correspond to the phone number registered in the phonebook, step 207 is performed. When the phone number of the originator corresponds to the phone number registered in the phonebook, the control unit 11 checks whether the phone number of the originator corresponds to the real photograph image in step 205. If it is determined in step 205 that the phone number of the originator corresponds to the real photograph image, step 215 is performed. In step 215, the control unit 11 starts image communication according to a command input by the user. At this time, the control unit 11 operates the camera so as to send the real photograph image to the originator. Then, step 217 is performed.

However, if it is determined in step 205 that the phone number of the originator does not correspond to the real photograph image, step 209 is performed. In step 209, the control unit 11 checks whether the phone number of the originator corresponds to the alternative substitute image. If it is determined in step 209 that the phone number of the originator corresponds to the alternative substitute image, step 211 is performed. In contrast, if it is determined in step 209 that the phone number of the originator does not correspond to the alternative substitute image, step 213 is performed. When it is determined that the alternative substitute image has been established corresponding to the phone number of the originator in step 209, the control unit 11 starts image communication according to a command input by the user. At this time, the control unit 11 sends the alternative substitute image to the originator. Then, step 217 is performed.

In addition, if it is determined in step 203 that the phone number of the originator does not corresponds to the phone number registered in the phonebook, the control unit 11 checks whether the substitute image transmission mode has been established in step 207. If it is determined in step 207 that the substitute image transmission mode has been established in the mobile equipment 100, step 213 is performed in order to start image communication according a command input by the user. At this time, the control unit 11 sends the basic substitute image to the originator. Then, step 217 is performed. In addition, if it is determined in step 207 that the substitute image transmission mode has not been established in the mobile equipment 100, step 215 is performed. In step 215, the control unit 11 starts image communication according to a command input by the user while transmitting the real photograph image to the originator. Then, step 217 is performed.

If the control unit 11 detects an end of image communication in step 217, the control unit 11 ends the operational procedure for the mobile equipment 100.

As described above, according to the present invention, when the image communication call is received from the originator, the control unit 11 detects the phone number of the originator. If the phone number of the originator corresponds to a phone number registered in the phonebook, the control unit 11 checks the transmission image corresponding to the phone number of the originator and then transmits the transmission image in the form of the basic substitute image, the alternative substitute image or the real photograph image. In addition, if the phone number of the originator does not correspond to a phone number registered in the phonebook, the control unit 11 checks whether the substitute image transmission mode has been established in the mobile equipment. If the substitute image transmission mode has been established in the mobile equipment, the basic substitute image is transmitted to the originator. Thus, the user can selectively transmit the image to the originator or the calling partner for image communication. Therefore, it is possible to prevent the image from being transmitted to the calling partner depending on situation of the user.

While the invention has been shown and described with reference to certain preferred embodiments thereof, it will be understood by those skilled in the art that various changes in form and details may be made therein without departing from the scope of the invention. For instance, although the present invention has been described for the case where phonebook information is stored in the memory unit 13 together with information related to the basic substitute image and the alternative substitute image, in the case where a mobile equipment is provided with a SIM card, such as a WDCMA terminal, it is also possible to store phonebook information in the SIM card together with information related to the basic substitute image, the alternative substitute image, and setting values thereof, which are established corresponding to phone numbers registered in the phonebook. In addition, data for the substitute image transmission mode can also be stored in the SIM card in such a manner that the basic substitute image can be transmitted to the originator, if an unknown phone number, which is not registered in the phone book, is detected or a phone number of the originator is not detected upon receiving the image communication call.

In this case, the user can selectively transmit the image to the calling partner for image communication. In addition, it is possible to prevent the image from being transmitted to the calling partner depending on situation of the user. According to the present invention, the SIM card can be used in other types of mobile equipment without changing the substitute images, which are established corresponding to the phone numbers registered in the phonebook, and the substitute image transmission mode. Accordingly, a user can conveniently transfer SIM cards between mobile devices and experience the object, aspects and advantages of the present invention.

Consequently, the scope of the invention is not limited to the above-described embodiments, but is defined by the appended claims.

## Claims

1. A method for image communication in a mobile equipment, the method comprising:
detecting a phone number of a calling party when an image communication call is received;
checking whether the phone number of the calling party corresponds to phone numbers registered in a phonebook; and
selecting a transmission image from between one of a real photograph image and a substitute image, which have been previously established corresponding to the phone numbers registered in the phonebook, and then transmitting a selected transmission image to the calling party during image communication when the phone number of the calling party corresponds with the phone numbers registered in the phonebook.

2. The method as claimed in claim 1, further comprising transmitting a basic substitute image to the calling party when the phone number of the calling party does not correspond with any of the phone numbers registered in the phonebook and a substitute image transmission mode is set in the mobile equipment.

3. The method as claimed in claim 1 or 2, wherein the substitute image includes a basic substitute image and an alternative substitute image.

4. The method as claimed in claim 3, wherein the step of transmitting the selected transmission image based on the phone number of the originator includes steps of:
determining a type of the transmission image corresponding with the phone number of the calling party;
starting image communication according to a command input by a user while transmitting the real photograph image to the calling party, if the real photograph image has been set to correspond with the phone number of the originator;
starting image communication according to a command input by a user while transmitting the basic substitute image to the calling party, if the basic substitute image has been set to correspond with the phone number of the calling party; and
starting image communication according to a command input by a user while transmitting the alternative substitute image to the calling party, if the alternative substitute image has been set to correspond with the phone number of the calling party.

5. The method as claimed in claim 4, wherein the alternative substitute image is selected by the user to correspond with the phone number of the calling party from among a plurality of substitute images, which have been previously stored.

6. The method as claimed in claim 5, wherein the alternative substitute image includes a still picture, a moving picture or an animation, and is created and stored by the user.

7. The method as claimed in claim 5, wherein the mobile equipment has a SIM card, and the phonebook and the substitute images established corresponding to the phone numbers registered in the phonebook are stored in the SIM card.

8. A method for image communication in a mobile equipment having a SIM card, the method comprising the steps of:
selecting one of a real photograph image, a basic substitute image, and an alternative substitute image in correspondence with a predetermined phone number registered in a phonebook stored in the SIM card according to selection of a user, and then storing setting values related to the predetermined phone number and substitute images in the SIM card;
detecting a phone number of an originator when an image communication call is received;
checking whether the phone number of the calling party corresponds to phone numbers registered in the phonebook; and
selecting a transmission image from among the real photograph image, the basic substitute image and the alternative image, which have been previously established corresponding to the phone numbers registered in the phonebook, and then transmitting a selected transmission image to the calling party during image communication when the phone number of the calling party corresponds with the phone numbers registered in the phonebook.

9. A mobile communication apparatus for image communication adapted to operate according to one of claims 1 to 8.
